# EUROPEAN PATENT APPLICATION

(11) **EP 3 165 380 A1**
(43) Date of publication of application: **10.05.2017**
(21) Application number: 15193641.6
(22) Date of filing: 09.11.2015
(51) Int. Cl.: B44C 5/04, F21V 33/00

(54) **DECORATIVE MOULDING FOR A BUILDING WALL**

(71) Applicant: Tarkett GDL, 9779 Lentzweiler (LU)
(72) Inventor: Di Croce, Pascal, 9559 Wiltz (LU); Simon, Jean-Yves, 9559 Wiltz (LU); Fogen, René, 9559 Wiltz (LU)
(74) Representative: Pronovem

(57) **Abstract**

A decorative moulding (10) for a building wall comprises a profiled body (16) with a back side for (18) attachment to the building wall and a front side (20), the profiled body having a recess (22) on the back side for accommodating a LED ribbon (24) and a coating film (26) attached on the front side. The profiled body is made of translucent light-diffusing material.

## Description

### Field of the Invention

The invention generally relates to the area of decorative moulding. Decorative mouldings for building walls, include, for instance, baseboards (skirtings), crown mouldings, chair rails or decorative door or window casings.

### Background of the Invention

Mouldings are well known elements for covering transitions between surfaces (e.g. between floor and wall or between ceiling and wall). Traditionally, decorative mouldings have been made of stone, cement or wood but, nowadays, such moulding are also available in synthetic materials.

More recently, skirtings with integrated light sources have become available. Such skirtings include a main body equipped with one or more transparent or translucent windows, behind which the light sources are arranged. The window may be continuous over the length of the skirting or there may be several, substantially aligned, windows. There are also skirtings with one or more recessed portions on their visible side, wherein the light sources are arranged so as to provide for indirect lighting. The walls of the recessed portions are arranged so as to prevent the light source from being viewed directly, except from a narrow cone along the wall or the floor.

### Summary of the Invention

According to the invention, a decorative moulding (e.g. a baseboard, a crown moulding, a chair rail or a decorative door or window casing) for a building wall comprises a profiled body with a back side for attachment to the building wall and a front side, the profiled body having a recess on the back side for accommodating a LED ribbon (also: LED strip) and a coating film attached on the front side. The profiled body is made of translucent light-diffusing material.

The acronym "LED" designates a light emitting diode. A LED ribbon is a flexible strip carrying LEDs. The LED ribbon may be equipped or not with an adhesive backing for easy fixation on a support. The LEDs of the LED ribbon may be single-colour LEDs or multi-colour LEDs (e.g. RGB LEDs). The LED ribbon preferably comprises individually addressable LEDs but ribbons without this feature may be used as well. According to a preferred embodiment of the invention, the decorative moulding comprises a LED ribbon accommodated in the recess on the back side.

As will be appreciated, the decorative moulding according to the first aspect of the invention can be fabricated at lesser expense, since it does not require the fitting of window elements on the main body of the moulding.

According to a first aspect of the invention, the coating film comprises a transparent base film and a print layer, the print layer modulating the transmittance of the coating film (for light having diffused across the profiled body) areally (or spatially). In this context, modulation does not necessarily imply smooth areal (spatial) variations. Indeed, the variations can be abrupt. Preferably, the print layer comprises one or more opaque portions delimiting one or more translucent or transparent portions disposed opposite the recess. The one or more translucent or transparent portions allow light originating from the LED ribbon to illuminate the space in front of the decorative moulding, whereas the one or more opaque portions block the light. The areal modulation of the transmittance may be in terms of overall intensity and/or in terms of spectral intensity. The use of a profiled body made of translucent light-diffusing material in combination with a transmittance-modulating print layer greatly facilitates the production of decorative luminous mouldings of attractive appearance.

The coating film preferably consists or consists essentially of polymer-based material (e.g. polyurethane, polyimide, polyethylene, polyvinyl chloride, polyester, polypropylene, etc.). The thickness of the coating film is preferably comprised in the range from 10 µm to 1 mm, more preferably in the range from 20 µm to 500 µm. As to the print layer, it may be formed directly on the back side of the coating film by printing (i.e. using the coating film as the printing substrate) or be provided as an individual printed substrate (carrying the ink) laminated on the back side (i.e. the non-exposed side) of the coating film.

A further aspect of the invention relates to a decorative moulding, wherein the coating film comprises or consists of a releasable tape The profiled body thus has a recess on the back side for accommodating the LED ribbon and, attached on the front side, opposite the recess, a releasable tape (e.g. a releasable adhesive tape or a release liner) extending in the longitudinal direction of the decorative moulding.

Yet a further aspect of the invention relates to a method of decorating a building wall using such a decorative moulding. The method may comprise providing a decorative moulding and placing a LED ribbon into the recess or onto the building wall in a location destined to come into opposition with the recess (alternatively, one may use a decorative moulding with a preinstalled LED ribbon). The moulding is then arranged on the building wall to be decorated and the LED ribbon is connected to a power supply. These steps may be carried out in the opposite order if that is deemed more convenient. When the moulding is in place, it may be painted using an opaque paint. After the paint has been applied, the releasable tape may be removed, leaving a clearance through which the light from the LED ribbon may diffuse. As used herein, the term "paint" is intended to cover all kinds of coatings applied in wet state (e.g. lacquer, etc.)

It will be appreciated that the moulding presented herein allows achieving a unique decorative effect.

The releasable tape may be opaque, transparent or translucent. Removal of the tape from the profiled body may be effected after the paint has dried or while it is still wet. The latter option is preferred if the cohesion of the dried paint is relatively strong, compared to the adhesion of the dried paint to the profiled body. The profiled body may comprise a coating promoting the adhesion of paint.

Preferably, the profiled body has a constant (i.e. invariant in the length) cross section. In this case, the production process of the profiled body may be particularly easy.

According to a preferred embodiment of the moulding, the profiled body consists of extruded, preferably closed-cell, polymer foam or of expanded polymer foam.

The base material of the extruded polymer foam is preferably selected from the group consisting of polystyrene, polyvinyl chloride, polyethylene, polypropylene and polyurethane. Further to the base material, the polymer foam may contain processing aids and additives (such as, e.g., filler, pigment, etc.) It may be worthwhile noting that the polymer foam may comprise recycled content (of the same type as the base material or of a different type).

Preferably, the extruded polymer foam is devoid of pigment and/or of filler. If pigment and/or filler is used in the foam composition, the amount thereof is preferably comprised in the range from 0.1 to 5 wt%, more preferably in the range from 0.1 to 1 wt%. When pigment is used, it is preferably white.

The profiled body preferably has a density comprised in the range from 200 to 450 g/cm³, more preferably in the range from 325 to 375 g/cm³. Preferably, the thickness of the translucent light-diffusing material between the LED ribbon and the front side is comprised in the range from 1 mm to 20 mm, preferably in the range from 1 to 15 mm and still more preferably in the range from 3 to 10 mm.

The releasable tape may cover the entirety of the front side of the profiled body. Preferably, however, the releasable tape covers only a part (e.g. between 5 and 80%, or between 10 and 50%) of the height of the front side.

According to a preferred embodiment of the moulding, the releasable tape comprises at least two separate portions for individual removal from the profiled body. When the separate portions are arranged at a distance from one another, the interstice between then may receive paint and become opaque. One may thereby achieve parallel lighting bands.

The at least two portions may also be directly adjacent one another and be separated from one another by one or more separation lines defining a contour of a decorative pattern. At least one of the separate portions may then be removed before painting and at least one of the separate portions may be removed after painting. That way, it is possible to paint a decorative pattern, leaving the negative of the painted pattern as a source of diffuse light. It will be appreciated that the user may decide himself which one(s) of the separate portions he removes before painting and which one(s) he keeps in place.

According to an alternative embodiment, the front side of the profiled body carries an opaque coating (e.g. a paint layer, a polymer sheet or the like). The releasable tape may be a part of that coating or separate therefrom. The opaque coating may be arranged on top of the releasable tape in such a way that removal of the tape or a part thereof results in opening a clearance in the opaque coating, which light emitted by the LED ribbon may pass through.

According to yet a further embodiment, the profiled body comprises a coating film in the form of a translucent film permanently attached to the front side of the profiled body, the releasable tape being a release liner on top of the translucent film. The translucent film may be a transparent adhesive tape. One advantage of using such a translucent film resides in the fact that it may be arranged so as to slightly protrude from the front side of the profiled body. The protrusion may be dimensioned in such a way that it corresponds at least approximately to the thickness of an opaque coating surrounding the translucent film on the front side or to the thickness of the paint to be applied. The thickness of the translucent film (not including the release liner) is preferably comprised in the range from 20 µm to 1 mm, more preferably in the range from 20 µm to 500 µm and still more preferably in the range from 25 µm to 300 µm. Another advantage of the translucent film is that it may take the role of a protective layer if the materials of the translucent film are chosen accordingly. Finally, the translucent film may create the impression that the light sources are arranged behind a conventional window.

### Brief Description of the Drawings

By way of example, preferred, non-limiting embodiments of the invention will now be described in detail with reference to the accompanying drawings, in which:
Fig. 1: is a cross-sectional view of a decorative moulding according to a preferred embodiment of the invention;
Fig. 2: is a trimetric view of the decorative moulding of Fig. 1 when applied in the corner between a wall and the floor, before painting;
Fig. 3: is a trimetric view of the decorative moulding of Figs. 1 and 2, after painting and removal of the releasable tape;
Fig. 4: is a cross-sectional view of a first variant of the decorative moulding of Fig. 1;
Fig. 5: is a cross-sectional view of a second variant of the decorative moulding of Fig. 1;
Fig. 6: is a cross-sectional view of a third variant of the decorative moulding of Fig 1;
Fig. 7: a trimetric view of a decorative moulding according to a further preferred embodiment of the invention;
Fig. 8: a trimetric view of a decorative moulding according to a yet a further preferred embodiment of the invention;
Fig. 9: a trimetric view of a decorative moulding according to still another preferred embodiment of the invention.

### Detailed Description of Preferred Embodiments

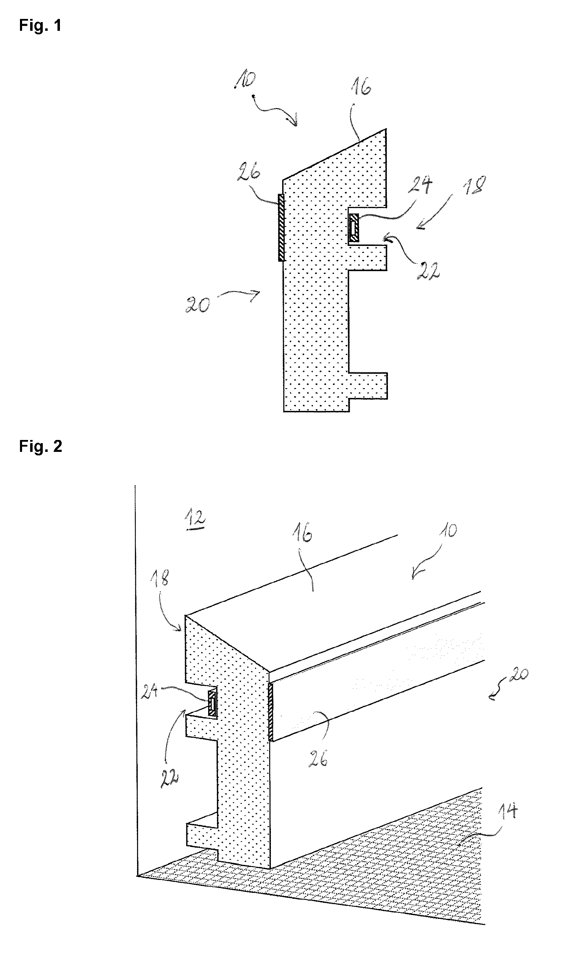

Figs. 1-3 show a decorative moulding (a baseboard) 10 for arrangement in the angle between a building wall 12 and a floor 14. The baseboard 10 essentially consists of a profile 16 of extruded closed-cell polymer foam. The profile 16 has a back side 18 to be applied against the building wall 12 and a front side 20 facing the room delimited by the building wall 12. The profile 16 has a recess 22 on the back side 18, wherein a LED ribbon 24 is arranged. Approximately at the same height as the recess 22, the profile 16 comprises, on its front side 20, a releasable (adhesive) tape 26. Both the releasable tape 26 and the LED ribbon 24 extend alongside of the baseboard 10. The closed-cell polymer foam of the profile 16 is translucent light-diffusing material.

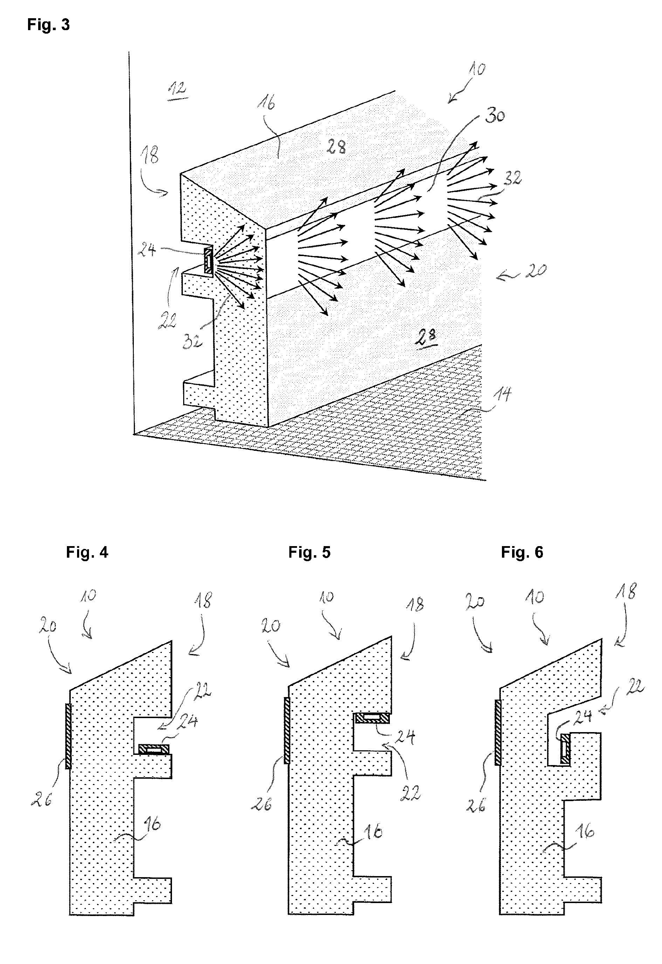

Installation of the baseboard 10 is effected as follows. When the LED ribbon 24 is in place within the recess 22, the baseboard 10 is applied (e.g. glued, screwed or clipped) on the building wall 12 and the LED ribbon 24 is connected to a power supply (not shown). When the moulding 10 is in place (as shown in Figs. 2 and 3), it is painted using opaque paint 28. After the paint has been applied, the releasable tape 26 is removed from the profile 16, leaving a clearance 30 through which light 32 emitted by the LED ribbon 24 may diffuse.

Figs. 4-6 show variants of the baseboard of Figs. 1-3. The variants of Figs. 4 and 5 differ from the baseboard described above only in different positions of the LED ribbon 20 within the recess 22. In the variant of Fig. 6, the recess 22 is deeper and has undercut. The LED ribbon 24 is arranged on the surface delimiting the recess 22 to the back. It shall be noted that the LED ribbon could also be fixed on the wall 12, at the height of the recess 22.

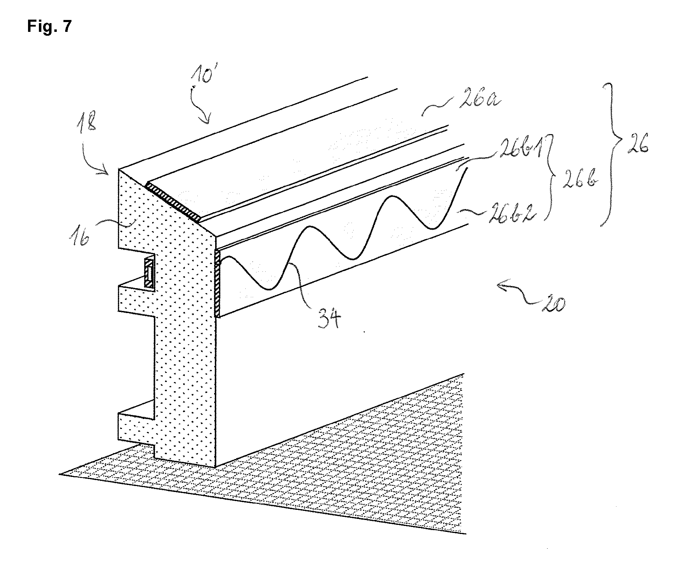

Fig. 7 illustrates a decorative moulding 10' wherein the releasable tape 26 on the front side of the profile 16 comprises plural portions. Tape portions 26a and 26b run parallel, at a distance from each other. Tape portion 26b is subdivided into sub-portions 26b1 and 26b2, which lie directly adjacent each other and are separated only by an undulating separation line 34.

All tape (sub-) portions 26a, 26b1 and 26b2 may remain in place for painting the profile 16. In this case, after removal of the releasable tape 26, one obtains two parallel light strips. Alternatively, one or more of the tape (sub-) portions 26a, 26b1 and 26b2 are removed prior to applying the paint. The customer may thus achieve different decorative effects using the same product. In the illustrated case, one may, for instance, remove sub-portion 26b1 before painting and thus obtain a straight light strip at the position of tape portion 26a and an undulated light strip at the position of tape sub-portion 26b2. It will be appreciated that the separation line 34 defines the contour of a very simple decorative pattern and that more complicated decorative patterns may be generated in that way. Such patterns could be periodic or not. Furthermore, it is not necessary that each (sub-) portion of the releasable tape is continuous on the entire length of the decorative moulding: the releasable tape may, in particular, have interruptions and/or islands.

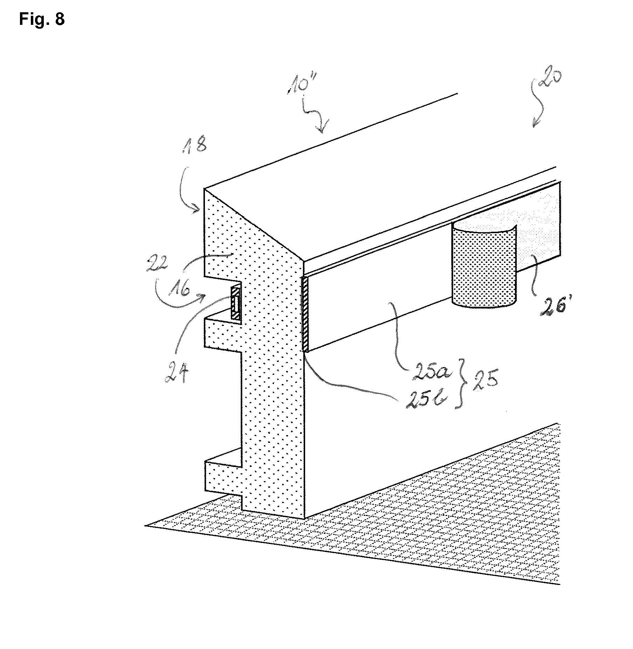

Fig. 8 shows a decorative moulding 10" according to yet a further embodiment of the invention. Like the previously described baseboards 10 and 10', the baseboard 10" essentially consists of a profile 16 of translucent, light-diffusing, extruded, closed-cell polymer foam. The profile 16 has a back side 18 and a front side 20. A recess 22 on the back side 18 accommodates a LED ribbon 24. On its front side 20, opposite the recess 22, the profile 16 comprises a transparent or translucent tape 25. The transparent or translucent tape 25 comprises a transparent or translucent film 25a, which is attached to the front side 20 by a layer of permanent adhesive 25b. The front side of the film 25a is protected by a release liner 26' (which may itself be translucent or opaque).

Installation of the baseboard 10" is effected as follows. When the LED ribbon 24 is in place (within the recess 22 or on the wall 12), the baseboard 10" is applied (e.g. glued, screwed or clipped) on the building wall 12 and the LED ribbon 24 is connected to a power supply (not shown). When the moulding 10 is in place it may be painted using opaque paint and the release liner 26' is removed, leaving the transparent or translucent tape 25 exposed. Preferably, the paint is applied with the same or approximately the same thickness as the transparent or translucent tape 25, so as to achieve a high-grade finish.

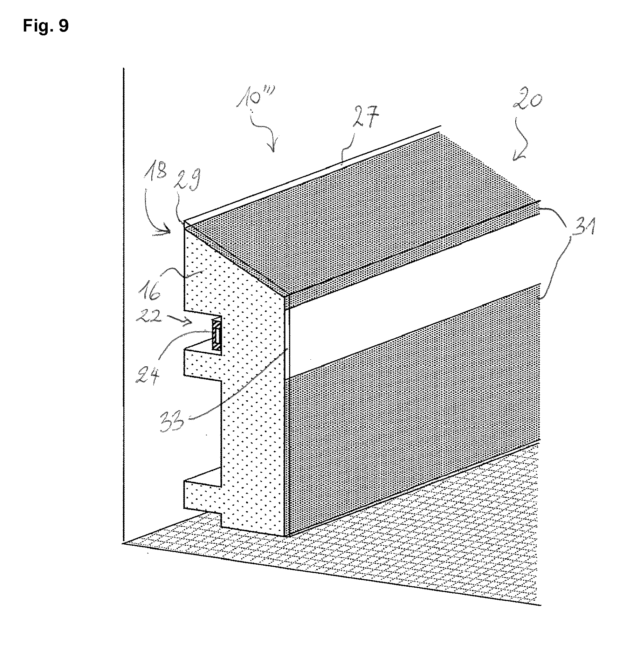

Fig. 9 shows a decorative moulding 10'" according to still another embodiment of the invention. The baseboard 10"' essentially consists of a profile 16 of translucent, light-diffusing, extruded, closed-cell polymer foam. The profile 16 has a back side 18 and a front side 20. A recess 22 on the back side 18 accommodates a LED ribbon 24. On its front side 20, opposite the recess 22, the profile 16 carries a coating film 27, consisting of a transparent base film 29 and a print layer 31. The print layer 31 spatially modulates the transmittance of the coating film 27 as a whole. Specifically, the print layer 31 comprises opaque portions that delimit a clearance 33 in the printed layer (here: in the form of a strip). Printed layers resulting in a more patterned clearance are of course possible.

While specific embodiments have been described herein in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Claims

1. A decorative moulding for a building wall, comprising a profiled body with a back side for attachment to the building wall and a front side, the profiled body having a recess on the back side for accommodating a LED ribbon and a coating film attached on the front side, the profiled body being made of translucent light-diffusing material.

2. The decorative moulding as claimed in claims 1, wherein the profiled body consists of closed-cell extruded polymer foam, the base material of the extruded polymer foam preferably being selected from the group consisting of polystyrene, polyvinyl chloride, polyethylene, polypropylene and polyurethane.

3. The decorative moulding as claimed in claim 2, wherein the extruded polymer foam is devoid of pigment and/or filler, or comprises less than 5 wt% of pigment and filler.

4. The decorative moulding as claimed in claim 1, 2 or 3, wherein the coating film comprises a transparent base film and a print layer, the print layer areally modulating the transmittance of the coating film.

5. The decorative moulding as claimed in any one of claims 1 to 4, wherein the coating film comprises or consists of a releasable tape attached on the front side opposite the recess, the releasable tape extending in the longitudinal direction of the decorative moulding.

6. The decorative moulding as claimed in claim 5, wherein the releasable tape covers only a part of the height of the front side.

7. The decorative moulding as claimed in claim 5 or 6, wherein releasable tape comprises at least two separate portions for individual removal from the profiled body.

8. The decorative moulding as claimed in claim 7, wherein the at least two portions are separated from one another by one or more separation lines defining a contour of a decorative pattern.

9. The decorative moulding as claimed in any one of claims 5 to 8, wherein the profiled body comprises a translucent film permanently attached to the front side, and wherein the releasable tape is a release liner on top of the translucent film.

10. The decorative moulding as claimed in any one of claims 1 to 9, wherein the decorative moulding is a baseboard.

11. The decorative moulding as claimed in any one of claims 1 to 9, wherein the decorative moulding is a crown moulding, a chair rail or a decorative door or window casing.

12. The decorative moulding as claimed in the combination of claims 3, 8 and 10.

13. The decorative moulding as claimed in any one of claims 1 to 12, comprising a LED ribbon accommodated in the recess.

14. A method of decorating a building wall, comprising:
providing a decorative moulding as claimed in any one of claims 5 to 8,
placing a LED ribbon into the recess or onto the building wall in a location destined to come into opposition with the recess;
arranging the decorative moulding on the building wall to be decorated and
connecting the LED ribbon to a power supply;
painting the decorative moulding;
and, when the paint has been applied, removing the releasable tape.

15. The method claimed in claim 14, wherein the decorative moulding is a decorative moulding as claimed in claim 7 or 8, and wherein at least one of the separate portions is removed before painting and at least one of the separate portions is removed after painting.
